# FASCICULE DE BREVET EUROPEEN

(11) **EP 3 005 518 B1**
(45) Date de publication et mention de la délivrance du brevet: **26.07.2017**
(21) Numéro de dépôt: 14732270.5
(22) Date de dépôt: 28.05.2014
(51) Int. Cl.: H02J 3/26, B60L 11/18

(54) **SELECTION DE PHASE POUR INSTALLATION ELECTRIQUE POLYPHASEE**
PHASENAUSWAHL IN EINER MEHRPHASIGEN ELEKTRISCHEN INSTALLATION
PHASE SELECTION FOR A POLYPHASE ELECTRICAL INSTALLATION

(30) Priorité: 28.05.2013 FR 1354796
(43) Date de publication de la demande: 13.04.2016
(73) Titulaire: Commissariat à l'Energie Atomique et aux Energies Alternatives, 75015 Paris (FR)
(72) Inventeur: GUILLEMIN, Sylvain, F-38580 Allevard les Bains (FR); VIAL, Rémi, F-73000 Chambery (FR)
(74) Mandataire: Thibon, Laurent
(86) Numéro de dépôt international: PCT/FR2014/051274
(87) Numéro de publication internationale: WO 2014/191692

(56) Documents cités:
- EP-A2- 0 556 754
- DE-A1-102011 078 047

## Description

La présente demande de brevet revendique la priorité de la demande de brevet français FR13/54796 qui sera considérée comme faisant partie intégrante de la présente description.

### Domaine

La présente description concerne, de façon générale, les installations électriques et, plus particulièrement, les installations recevant une alimentation triphasée. Un exemple d'application de la présente invention concerne les installations de recharge de véhicules électriques.

### Exposé de l'art antérieur

On connaît du document WO2012/110472 du demandeur un dispositif d'équilibrage de charge sur un réseau polyphasé qui, pour faire passer une charge d'une phase à une autre, utilise une tension monophasée générée par un onduleur. Cette tension est tout d'abord synchronisée avec la première phase, puis déphasée progressivement jusqu'à synchronisation avec l'autre phase.

On connaît également des systèmes sélecteurs de phase qui ont pour objectif d'éviter une perte d'alimentation d'une charge monophasée. Pour cela, ces sélecteurs surveillent la valeur de la tension des différentes phases et, si la tension de la phase utilisée par la charge monophasée devient inférieure à un seuil, commute vers une autre phase du réseau polyphasé. Un tel sélecteur de phase a toutefois généralement pour conséquence d'accroitre le déséquilibre entre les phases.

Dans les installations de rechargement des batteries de véhicules électriques, plusieurs bornes de rechargement sont généralement alimentées à partir d'un réseau polyphasé (typiquement triphasé). Les chargeurs des véhicules électriques sont généralement monophasés, ce qui pose des problèmes d'équilibrage des charges connectées aux différentes phases.

Le document EP 0 556 754 décrit un système de distribution électrique équipé d'un sélecteur de phase utilisant un circuit de mesure de la charge des phases.

Les documents DE 10 2011 078047 et US 2013 062970 décrivent un sélecteur de phase mesurant la charge des différentes phases.

### Résumé

Il serait souhaitable de disposer d'un système de sélection de phase dans un réseau polyphasé qui soit compatible avec un équilibrage des phases, c'est-à-dire une répartition équilibrée des charges sur les différentes phases du réseau polyphasé.

Il serait par ailleurs souhaitable de disposer d'un tel sélecteur qui soit compatible avec les installations de rechargement de véhicules électriques.

Un objet d'un mode de réalisation est de proposer un sélecteur de phase qui pallie tout ou partie des inconvénients des sélecteurs de phase usuels.

Un autre objet d'un mode de réalisation est de proposer une solution compatible avec des équipements monophasés et triphasés.

Pour atteindre tout ou partie de ces objets ainsi que d'autres, on prévoit un procédé d'équilibrage d'un réseau polyphasé d'alimentation d'une installation comportant plusieurs prises de branchement d'équipements électriques, selon la revendication 1, dans lequel :
pour chaque prise, un sélecteur de phase est intercalé, entre un système de fourniture d'une tension polyphasée et ladite prise, et intercepte un signal de commande de mise sous tension de la prise ; et
à réception d'une commande de mise sous tension d'un équipement monophasé, la phase la moins chargée est choisie pour alimenter cet équipement, l'évaluation de la phase la moins chargée étant effectuée en amont du système. Chaque sélecteur de phase intercepte un signal de commande de mise sous tension de la prise à laquelle il est associé.

Selon un mode de réalisation, la commande de mise sous tension est transmise à la prise postérieurement à la sélection de la phase.

Selon un mode de réalisation, une commande de sélection de la phase la moins chargée est envoyée par ledit système auxdits sélecteurs.

Selon un mode de réalisation, l'évaluation de la phase la moins chargée s'effectue par une mesure du courant prélevé sur les différentes phases en amont du sélecteur.

Un mode de réalisation prévoit également un sélecteur de phase adapté à la mise en oeuvre du procédé de sélection de phase.

Selon un mode de réalisation, le sélecteur comporte :
des premières bornes destinées à recevoir une alimentation polyphasée ;
des secondes bornes destinées à être connectées à une prise d'alimentation d'un équipement électrique ;
un ensemble d'interrupteurs de connexion desdites premières bornes auxdites secondes bornes ; et
un circuit de commande desdits interrupteurs.

Selon un mode de réalisation, ledit circuit de commande interrompt une liaison de commande entre le système et un contacteur, lui-même relié à la prise.

Un mode de réalisation prévoit également une installation d'alimentation polyphasée, comportant :
un système de fourniture d'une tension polyphasée ;
plusieurs prises d'alimentation d'équipements ; et
entre ledit système et chaque prise, un sélecteur de phase.

Selon un mode de réalisation, un contacteur de mise sous tension est intercalé entre chaque sélecteur et la prise à laquelle il est associé.

### Brève description des dessins

Ces caractéristiques et avantages, ainsi que d'autres, seront exposés en détail dans la description suivante de modes de réalisation particuliers, faite à titre non limitatif en relation avec les figures jointes parmi lesquelles :
la figure 1 illustre, de façon très schématique, un exemple d'installation de recharge de véhicules automobiles électriques du type auquel s'appliquent plus particulièrement les modes de réalisation qui vont être décrits ;
la figure 2 représente un exemple de prises triphasées dans trois configurations de phase ;
la figure 3 est une représentation très schématique d'un mode de réalisation d'un sélecteur de phase ;
la figure 4 représente, de façon très schématique, un sélecteur de phase du type de celui de la figure 3 dans son environnement ;
la figure 5 est un schéma bloc plus détaillé du sélecteur de phase des figures 3 et 4 ;
les figures 6A et 6B sont des chronogrammes illustrant le fonctionnement du sélecteur de phase de la figure 4 ;
la figure 7 représente, de façon schématique et sous forme de blocs, une variante du sélecteur de phase adaptée à une prise monophasée ;
la figure 8 illustre un mode de réalisation d'un système d'équilibrage de phase exploitant des sélecteurs de phase ; et
la figure 9 illustre une variante de la figure 8.

### Description détaillée

De mêmes éléments ont été désignés par de mêmes références aux différentes figures. Par souci de clarté, seuls les éléments utiles à la compréhension des modes de réalisation qui vont être décrits ont été représentés et seront détaillés. En particulier, les éléments de fourniture de l'alimentation polyphasée n'ont pas été détaillés, les modes de réalisation décrits étant compatibles avec les éléments usuels. De plus, dans l'application à un système de recharge de véhicules électriques multi-bornes, la gestion des différentes bornes pour optimiser le dimensionnement et respecter les contraintes contractuelles et techniques d'utilisation du réseau électrique qui alimente la station de recharge n'a pas non plus été détaillée, les modes de réalisation décrits étant là encore compatibles avec les processus de gestion usuels.

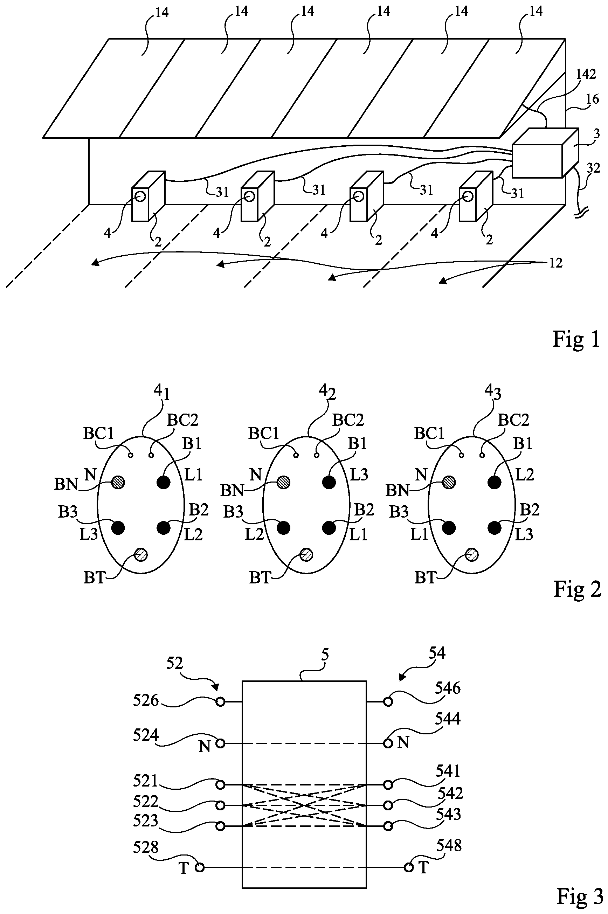

La figure 1 représente schématiquement un exemple d'installation de recharge de véhicules électriques. Une telle installation équipe des emplacements de parking 12 où sont destinés à se garer des véhicules électriques à recharger. Chaque place 12 de parking est équipée d'une borne 2 de recharge pourvue d'une prise 4, le plus souvent normalisée, destinée à recevoir une fiche d'un câble de rechargement du véhicule électrique (non représenté en figure 1).

L'énergie électrique est distribuée aux différentes bornes 2 depuis le système 3, au travers de liaisons 31. Le système 3 est raccordé (liaison 32) au réseau de distribution électrique polyphasé (typiquement triphasé) pour prélever de l'électricité du réseau. Le système 3 pourrait recevoir de l'énergie électrique provenant d'autres sources que le réseau de distribution polyphasé. Il pourrait s'agir, par exemple, d'une installation photovoltaïque (par exemple des panneaux photovoltaïques 14 équipant le toit d'un abri 16 recouvrant les emplacements 12), éolienne ou hydro-électrique.

En pratique, lorsqu'un véhicule électrique souhaite recharger ses batteries, l'utilisateur branche la fiche du câble de rechargement du véhicule à une prise 4 d'une borne 2. Les prises et fiches comportent généralement, non seulement des conducteurs d'alimentation, mais également des liaisons de communication entre le véhicule et le système 3 (en variante, ces liaisons de communication peuvent être radio). Les liaisons de communication servent à vérifier la bonne connexion du véhicule électrique à la borne et peuvent être utilisées pour moduler la puissance de charge du véhicule.

Les prises 4 sont le plus souvent des prises triphasées (en particulier, la production d'énergie à partir des panneaux photovoltaïques s'effectue avec un onduleur triphasé et l'installation photovoltaïque est le plus souvent reliée au réseau triphasé de distribution). Cependant, la plupart des véhicules électriques disposent de chargeurs monophasés, de sorte que les fiches qui les relient aux prises 4 ne comportent qu'un conducteur de phase, en plus d'un conducteur de neutre, d'un conducteur de terre et d'un ou plusieurs fils de commande. Dans le cas d'un véhicule embarquant un chargeur monophasé, seul le conducteur relié à la borne B1 (voir figure 2) de la fiche sera utilisé.

L'équilibrage des phases dans l'installation s'effectue habituellement de façon statique, en raccordant les bornes B1 des prises 4 des bornes de rechargement 2 tantôt au conducteur de phase L1, tantôt au conducteur de phase L2 et tantôt au conducteur de phase L3, provenant du système 3.

La figure 2 est une représentation schématique d'un exemple de prises 4 normalisées. L'exemple pris ici est une prise de type "EV plug alliance type 3" qui est à la fois monophasée et triphasée. Trois prises 4₁, 4₂ et 4₃ ont été représentées en figure 2. Chaque prise 4ᵢ (i allant de 1 et 3 en figure 2) comporte trois bornes B1, B2 et B3, une borne de neutre BN, une borne de terre BT et une ou plusieurs (deux dans l'exemple représenté) bornes de communication BC1 et BC2.

De façon arbitraire et à titre d'exemple, on suppose le cas où les trois phases notées L1, L2 et L3 du réseau (provenant du système 3) sont respectivement connectées aux bornes B1, B2 et B3 pour la prise 4₁, aux bornes B2, B3 et B1 pour la borne 4₂, et aux bornes B3, B1 et B2 pour la prise 4₃. C'est généralement ce qui est prévu dans le cas d'un équilibrage statique. Ainsi, si trois véhicules sont respectivement branchés par des prises monophasées dont la broche de phase est en regard de la borne B1 et prélèvent la même puissance en même temps, les phases sont équilibrées.

Ce cas idéal ne se produit toutefois pas en pratique et on assiste à un déséquilibre de charge entre les phases.

De plus, dès que le nombre de prises n'est pas un multiple de trois (par exemple quatre prises dans l'exemple de la figure 1), il n'est déjà plus possible d'équilibrer les phases même statiquement.

La figure 3 est une représentation schématique d'un mode de réalisation d'un sélecteur de phase 5, destiné à être intercalé entre le système 3 et chaque prise 4ᵢ à des fins d'équilibrage de phase.

Le sélecteur 5 comporte un bornier d'entrée 52, pourvu de trois bornes 521, 522 et 523 destinées à être connectées aux différentes phases d'un réseau polyphasé (par exemple triphasé). Par exemple, ces bornes sont reliées au système 3 de la figure 1. Le bornier 52 comporte également une borne 524 destinée à être connectée au neutre de l'alimentation triphasée ainsi qu'au moins une borne 526 destinée à véhiculer des signaux de commande et de contrôle.

Le sélecteur 5 comporte également un bornier de sortie 54 pourvu, dans cet exemple, de trois bornes 541, 542 et 543, destinées à fournir, à une prise 4, les phases d'une alimentation polyphasée, une borne 544 de neutre et au moins une borne 546 de transmission de signaux de commande.

Côté sortie, le bornier 54 est destiné à être relié directement ou par l'intermédiaire d'un contacteur (non représenté en figure 3) à une prise 4 d'une borne 2. Le rôle du contacteur est, sous commande d'un signal présent sur la borne 546, de relier l'ensemble des bornes 541 à 544 à la prise 4. Comme on le verra par la suite, la fonction de ce contacteur peut le cas échéant être remplie par le sélecteur 5 lui-même.

En pratique, l'amont et l'aval du sélecteur 5 sont reliés à la terre T, soit indépendamment du sélecteur 5 soit, comme dans l'exemple représenté à travers des bornes respectivement 528 et 548 des borniers d'entrée et de sortie.

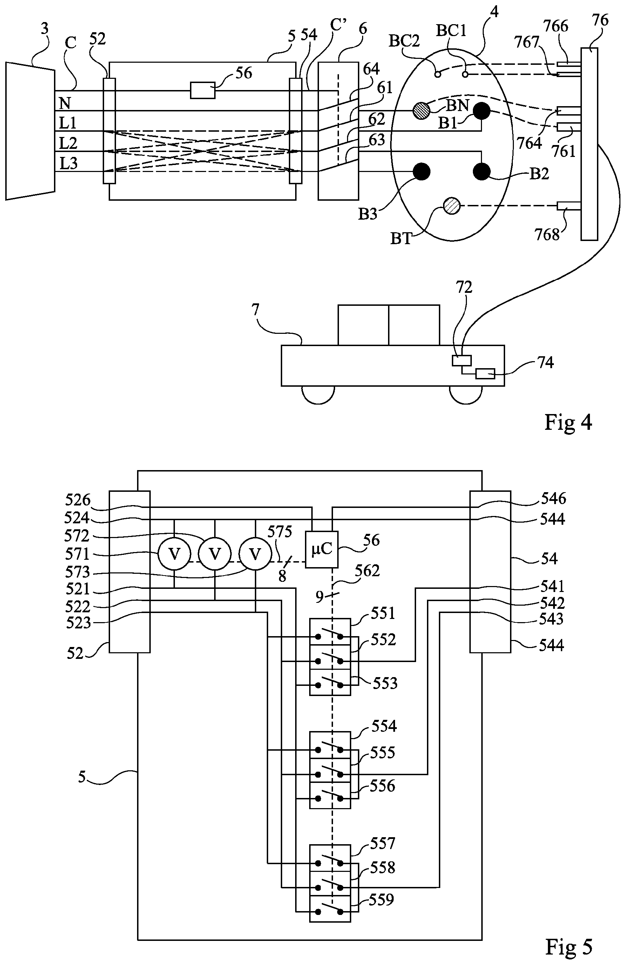

La figure 4 représente un exemple de sélecteur 5 dans son environnement. Dans cet exemple, le bornier 52 du sélecteur 5 est relié directement au système 3 (figure 1). En variante, les signaux de commande C pourront être véhiculés vers un autre circuit. Coté bornier de sortie 54, celui-ci est connecté à un contacteur 6 intermédiaire entre le sélecteur 5 et la prise 4 à laquelle le sélecteur est destiné. On suppose le cas d'un véhicule 7 disposant d'un chargeur 72 de batterie 74 monophasé. Le chargeur 72 est alors connecté, par l'intermédiaire d'une fiche 76, à la prise 4. La fiche 76 comporte deux broches 766 et 767 destinées à connecter les bornes BC1 et BC2 de la prise 4, deux broches 761 et 764 destinées à connecter respectivement les bornes B1 et BN de la prise 4 et une broche 768 de terre destinée à connecter la borne BT de la prise 4. Dans l'exemple d'un chargeur monophasé, les bornes B2 et B3 de la prise 4 ne sont pas reliées au chargeur 72. Dans le cas d'un chargeur bi ou triphasé, une ou deux broches supplémentaires équipent la fiche 76 pour connecter les bornes B2 et B3 de la prise 4 pour les connecter au chargeur du véhicule électrique.

Le contacteur 6 agit, sous commande d'un signal C' en sortie du bornier 54 pour commander des interrupteurs 61 à 64 reliant respectivement les bornes 541 à 544 du bornier de sortie 54 aux bornes B1, B2, B3 et BN de la prise 4.

Dans les modes de réalisation qui vont être décrits, le rôle du sélecteur 5 est d'aiguiller les trois phases depuis le bornier d'entrée vers le bornier de sortie en sélectionnant la phase la moins chargée pour la borne 541, donc la borne B1 de la prise 4.

La figure 5 est une représentation schématique plus détaillée d'un mode de réalisation de sélecteur 5. Dans cet exemple de réalisation, l'identification de la phase la moins chargée est faite par comparaison des tensions efficaces de chaque phase. D'autres méthodes d'identification de la phase la moins chargée sont évoquées plus loin. Neuf interrupteurs 551 à 559 ont des premières bornes (d'entrée) reliées aux bornes 521 à 523 et des secondes bornes (de sortie) reliées aux bornes 541 à 543 pour, en fonctionnement, aiguiller les trois phases présentes sur les bornes 521 à 523 vers les bornes 541 à 543. Par exemple, les bornes d'entrée des interrupteurs 551, 554 et 557 sont reliées à la borne 521, les bornes d'entrée des interrupteurs 552, 555 et 558 sont reliées à la borne 522, et les bornes d'entrée des interrupteurs 553, 556 et 559 sont reliées à la borne 523. Côté bornier 54, les bornes de sortie des interrupteurs 551 à 553 sont reliées à la borne 541, les bornes de sortie des interrupteurs 554 à 556 sont reliées à la borne 542, et les bornes de sortie des interrupteurs 557 à 559 sont reliées à la borne 543. Les interrupteurs 551 à 559 sont commandables individuellement et reçoivent, chacun, un signal (signaux 562) provenant d'un circuit 56, de préférence inclus dans le sélecteur 5. Dans l'exemple représenté, le circuit 56 reçoit des informations relatives aux tensions présentes sur chacune des phases en entrée du sélecteur. Cette fonction a été symbolisée en figure 5 par la présence de voltmètres 571, 572 et 573 (V) de préférence inclus dans le sélecteur 5, ou autre circuit de mesure de tension, en amont des interrupteurs 551 à 559, fournissant des résultats de mesure (signaux 575) au circuit 56. Par ailleurs, le circuit 56 a des bornes reliées aux bornes 526 et 546 pour intercepter les communications entre le système 3 et la prise ou son contacteur, et exploiter les signaux de commande et de contrôle.

Le signal 526 est envoyé par le système 3 à la borne 2 pour déclencher la fourniture d'énergie électrique au véhicule.

On prévoit de sélectionner la phase la moins chargée pour charger la batterie du véhicule. Pour cela, dans l'exemple de la figure 5, on sélectionne la phase dont la tension est la plus élevée, qui correspond donc à la phase sur laquelle les charges connectées au système 3 (voire en amont) tirent le moins. Ainsi, la sélection de phase participe à l'équilibrage des phases.

On tire profit du fait que, lorsqu'un véhicule doit être chargé par l'installation, ce n'est pas à quelques secondes près. En d'autres termes, on peut accepter un léger décalage entre le branchement de la fiche 76 dans la prise 4, ou sa commande de connexion, et la fourniture de la tension d'alimentation. Ce décalage correspond au temps nécessaire à mesurer les phases et à sélectionner la phase la moins chargée. Plus généralement, cela revient à intercepter le signal de commande de mise sous tension de la prise le temps de sélectionner l'ordre des phases présentées à la prise de raccordement de l'équipement électrique.

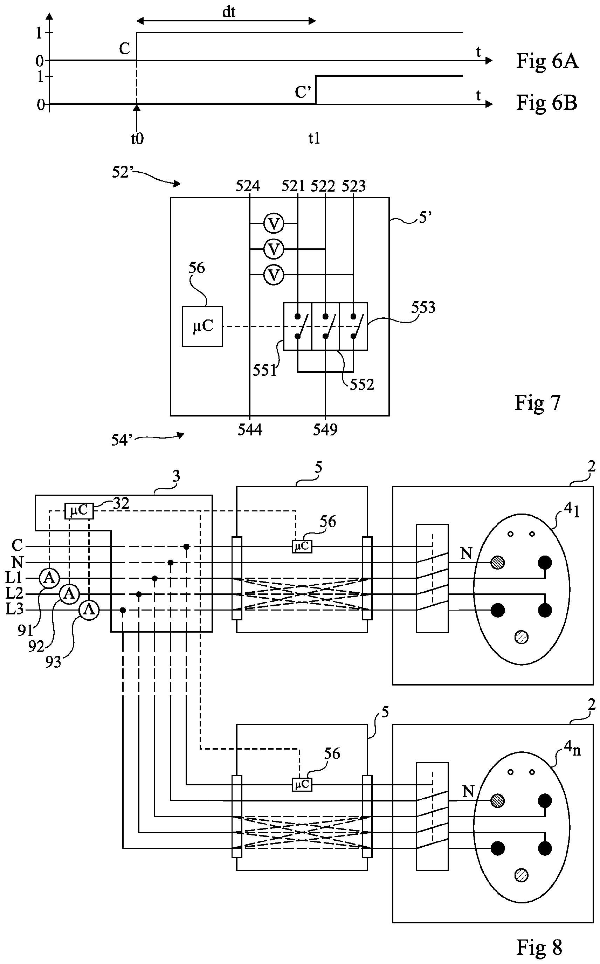

Les figures 6A et 6B sont des chronogrammes illustrant le fonctionnement du sélecteur 5. La figure 6A est un chronogramme d'état du signal C de commande provenant du système 3 afin de déclencher la fourniture d'une alimentation à la borne 4 via le contacteur 6. La figure 6B est un chronogramme d'état du signal C' en sortie du sélecteur 5 de commande du contacteur 6. Dans une version simple, le signal C, fourni par le système 3 au contacteur 6, est un échelon de tension (signal numérique en tout ou rien) pour commander la fermeture des interrupteurs 61 à 64. Selon cet exemple, l'apparition (instant t0) d'un front montant sur le signal C, correspondant à une instruction de fourniture d'alimentation à la borne 4, déclenche la mesure des niveaux de tension des phases L1 à L3. En variante, la mesure de tension est faite périodiquement et on prend en compte, à l'instant t0, la dernière mesure effectuée. Quand la mesure est effectuée (ou prise en compte) et que le sélecteur 5 a commuté les interrupteurs 551 à 559 de façon appropriée, le circuit 56 commute (instant t1) le signal C' à l'état haut pour commander le contacteur 6. En d'autres termes, le circuit 56 intercepte l'ordre de commande provenant du système 3 et ne le fait suivre au contacteur 6 qu'une fois que la sélection de la phase sur laquelle est connectée la borne 541 a été faite. La mesure des niveaux de tension peut s'effectuer séquentiellement ou en parallèle. De même, la comparaison effectuée par le circuit 56 peut être analogique ou numérique. En pratique, on utilisera de préférence une unité de traitement de type microcontrôleur (µC).

La présence du sélecteur 5 et la sélection de phase opérée ne nuit pas au raccordement d'une fiche triphasée sur la prise 4. En effet, dans le cas d'un chargeur triphasé d'un véhicule automobile, la prise 4 étant alimentée par les trois phases, le fonctionnement est maintenu. On veillera simplement à commander les interrupteurs 551 à 559 de façon adaptée pour respecter la rotation des phases en fonction de celle alimentant la borne B1, c'est-à-dire la rotation de phases illustrée en relation avec la figure 2.

Selon un mode de réalisation, le sélecteur 5 est intercalé entre le système 3 et les différents contacteurs 6 associés aux prises 4. Dans ce mode de réalisation, aucune modification du reste de l'installation n'est nécessaire, la sélection de phase étant gérée intégralement par le sélecteur 5. L'intervention du sélecteur 5 est transparente pour le système 3 et pour le contacteur 6.

Selon un autre mode de réalisation, on tire profit du fait que les interrupteurs 551 à 559 du sélecteur 5 peuvent jouer le rôle des interrupteurs 61 à 63 du connecteur 6. On prévoit alors, dans le sélecteur 5, un interrupteur supplémentaire (non représenté) pour interrompre la connexion de neutre et la rendre commandable à partir du circuit 56. Cela permet de supprimer le contacteur 6 qui n'est alors plus nécessaire.

La figure 7 illustre une variante de réalisation d'un sélecteur de phase 5' adapté à des bornes de recharge monophasées. Pour simplifier, les bornes de commande et de terre n'ont pas été illustrées en figure 7. Le bornier d'entrée 52' est identique au bornier d'entrée 52 du sélecteur 5 des figures précédentes. Toutefois, côté bornier de sortie 54' une seule borne de phase 549 est prévue et est destinée à être raccordée à une prise monophasée (non représentée). La constitution du sélecteur 5' est simplifiée en ce sens que seuls trois interrupteurs 551 à 553 sont nécessaires.

La figure 8 représente schématiquement une installation selon un mode de réalisation préféré dans laquelle on tient compte de la consommation en courant global au niveau de l'installation. Selon ce mode de réalisation, au lieu de mesurer les tensions des phases au niveau du sélecteur 5, on mesure une information représentative du courant tiré sur chacune des phases par le système 3, c'est-à-dire par l'installation entière. Ce fonctionnement est illustré par des ampèremètres 91, 92 et 93 (A) dont les mesures sont envoyées à un circuit électronique de traitement 32 (par exemple un microcontrôleur µC) du système 3. Le système 3 envoie des signaux relatifs à l'identification de la phase la moins chargée aux micro-contrôleurs respectifs 56 des différents sélecteurs 5. Dans ce mode de réalisation, lorsqu'un sélecteur intercepte un signal de commande provenant de la prise à laquelle il est associé, il transmet l'information correspondante au circuit 32 du système 3 afin de déclencher la mesure permettant d'évaluer la phase la moins chargée en amont de l'installation. En variante, le circuit 32 évalue en permanence (périodiquement) la phase la moins chargée et transmet l'information aux sélecteurs. Dans ce cas, chaque sélecteur a l'information lorsqu'il reçoit une commande de sa prise et peut alors lui fournir les phases dans l'ordre approprié.

Un avantage de ce mode de réalisation est qu'il permet d'équilibrer les consommations en aval du système 3 sans tenir compte d'un éventuel déséquilibre en amont du système 3.

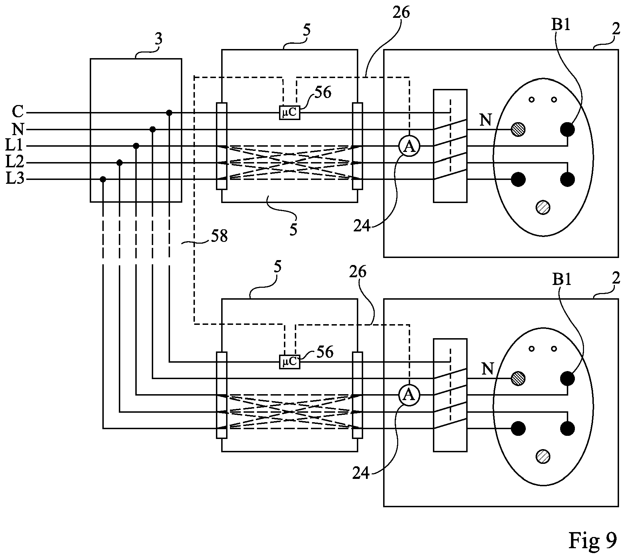

La figure 9 représente schématiquement une variante de réalisation selon laquelle la mesure effectuée par les sélecteurs 5 pour déterminer la phase à connecter aux bornes 2 est une mesure en courant (ampèremètre 24) effectuée au niveau des prises 4 sur le conducteur d'alimentation de la borne B1 des prises concernées. Cela permet d'améliorer l'équilibrage des phases en tenant compte des consommations respectives des différentes bornes. Pour cela, les circuits 56 des différents sélecteurs doivent communiquer entre eux (liaison 58). En supposant que chaque borne émet, sur un bus de communication 26 (distinct ou confondu avec le bus véhiculant le ou les signaux C'), le résultat de la mesure de courant effectuée par son ampèremètre, il est possible de déterminer la phase la moins chargée en comparant les différentes mesures. Un tel mode de réalisation ne nécessite pas d'intervention au niveau du système 3, mais requiert cependant de disposer de mesures de courant au niveau des bornes 4. En fait, ce mode de réalisation peut tirer profit de l'existence de tels dispositifs de mesure de courant présents au niveau des bornes 4 si l'information relative à la mesure effectuée peut être prélevée sans perturber le fonctionnement.

Un avantage des modes de réalisation qui ont été décrits est qu'il est désormais possible de sélectionner une phase dans un réseau polyphasé pour alimenter une charge tout en participant à l'équilibrage des phases du réseau.

Un autre avantage des modes de réalisation qui ont été décrits est qu'ils sont compatibles avec un système de gestion d'énergie de bornes de recharge de véhicules automobiles.

Un autre avantage, plus particulièrement présent dans les modes de réalisation des figures 4 et 5, est qu'aucune modification des systèmes de recharge existants n'est nécessaire. Il suffit d'intercaler un sélecteur 5 entre la prise 4 et le système 3 de fourniture d'électricité polyphasé. En particulier, bien qu'il soit préférable d'équiper chaque prise 4 d'un sélecteur de phase, il est déjà avantageux de n'en équiper qu'une partie.

Un autre avantage des modes de réalisation qui ont été décrits est qu'ils optimisent le prélèvement d'énergie sur le réseau de fourniture de l'électricité.

On notera qu'à la différence de systèmes de commutation de phase en cours d'alimentation qui doivent préserver une alimentation électrique sans interruption, les modes de réalisation qui ont été décrits sont destinés à commuter les phases, avant d'alimenter la charge.

Divers modes de réalisation ont été décrits. Diverses variantes et modifications apparaîtront à l'homme de l'art. En particulier, bien que l'invention ait été décrite plus particulièrement en relation avec un réseau triphasé, elle s'applique plus généralement à tout réseau polyphasé. De plus, bien que l'invention ait été décrite plus particulièrement en relation avec une installation de recharge de véhicules automobiles, elle s'applique plus généralement à un sélecteur de phase destiné à toute charge pour laquelle la mise en service peut accepter un léger retard (typiquement de quelques millisecondes), le temps d'effectuer l'identification de la phase la moins chargée. En outre, un ou plusieurs systèmes pourront équiper une installation. Enfin, bien que les modes de réalisation ci-dessus aient été décrits en relation avec un exemple préféré où l'on prévoit un sélecteur 5 par prise, il reste possible de connecter plusieurs prises 4 en parallèle sur le bornier de sortie d'un même sélecteur. La mise en oeuvre pratique des modes de réalisation décrits est à la portée de l'homme du métier à partir des indications fonctionnelles données ci-dessus en utilisant des circuits et outils en eux-mêmes usuels.

## Revendications

1. Procédé d'équilibrage d'un réseau polyphasé d'alimentation d'une installation comportant plusieurs prises (4) de branchement d'équipements électriques (72), dans lequel :
pour chaque prise, un sélecteur de phase (5) est intercalé, entre un système (3) de fourniture d'une tension polyphasée et ladite prise ; et
à réception d'une commande de mise sous tension d'un des équipements monophasés, la phase la moins chargée est choisie pour alimenter cet équipement, **caractérisé en ce que**
l'évaluation de la phase la moins chargée est effectuée sur la base d'une mesure des tensions ou des courants des phases, ladite mesure des tensions ou des courants étant déclenchée par un signal de commande (C) de mise sous tension de la prise, fourni par ledit système de fourniture d'une tension polyphasée et intercepté par ledit sélecteur de phase.

2. Procédé selon la revendication 1, dans lequel la commande de mise sous tension est transmise à la prise postérieurement à la sélection de la phase.

3. Procédé selon la revendication 1 ou 2, dans lequel une commande de sélection de la phase la moins chargée est envoyée par ledit système (3) de fourniture d'une tension polyphasée auxdits sélecteurs.

4. Sélecteur de phase (5), **caractérisé en ce qu'**il est adapté à la mise en oeuvre d'un procédé selon l'une quelconque des revendications 1 à 3.

5. Sélecteur de phase selon la revendication 4, comportant :
des premières bornes (521, 522, 523) destinées à recevoir une alimentation polyphasée ;
des secondes bornes (541, 542, 543) destinées à être connectées à une prise (4) d'alimentation d'un équipement électrique ;
un ensemble d'interrupteurs (551, 552, 553, 554, 555, 556, 557, 558, 559) de connexion desdites premières bornes auxdites secondes bornes ; et
un circuit (56) de commande desdits interrupteurs.

6. Sélecteur de phase selon la revendication 5 dans lequel ledit circuit de commande (56) interrompt une liaison de commande entre le système (3) et un contacteur (6), lui-même relié à la prise (4).

7. Installation d'alimentation polyphasée, comportant :
un système (3) de fourniture d'une tension polyphasée ;
plusieurs prises (4) d'alimentation d'équipements ; et
entre ledit système et chaque prise, un sélecteur de phase (5) conforme à l'une quelconque des revendications 4 à 6.

8. Installation selon la revendication 7, dans laquelle un contacteur (6) de mise sous tension est intercalé entre chaque sélecteur (5) et la prise (4) à laquelle il est associé.

## Patentansprüche

1. Ein Verfahren zum Ausgleichen eines mehrphasigen Netzwerks zum Mit-Leistung-Versorgen einer Installation, die eine Vielzahl von Buchsen bzw. Steckdosen (4) zur Verbindung von elektrischer Einrichtung (72) aufweist, wobei:
für jede Buchse, ein Phasenwähler (5) zwischen einem mehrphasigen Spannungsversorgungssystem (3) und der Buchse angeordnet ist; und
sobald ein Steuersignal zum Mit-Energie-Versorgen einer der einzelphasigen Einrichtungen empfangen worden ist, die am geringsten belastete Phase ausgewählt wird, um diese Einrichtung mit Leistung zu versorgen, **dadurch gekennzeichnet, dass**:
die Evaluation der am geringsten belasteten Phase auf einer Messung der Spannung oder der Ströme der Phasen basiert, wobei die Messung der Spannungen oder der Ströme ausgelöst wird durch ein eine Buchse mit Energie versorgendes Steuersignal (C), das durch das mehrphasige Spannungsversorgungssystem geliefert wird und durch den Phasenwähler empfangen bzw. abgefangen wird.

2. Verfahren nach Anspruch 1, wobei das mit Energie versorgende Steuersignal nachfolgend auf die Phasenauswahl an die Buchse gesendet wird.

3. Verfahren nach Anspruch 1 oder 2, wobei ein Steuersignal zum Auswählen der am geringsten belasteten Phase durch das mehrphasige Spannungsversorgungssystem (3) an die Wähler bzw. Wählelemente gesendet wird.

4. Phasenwähler bzw. Phasenauswahlelement (5), **dadurch gekennzeichnet, dass** er bzw. es in der Lage ist, das Verfahren nach einem der Ansprüche 1 bis 3 zu implementieren.

5. Phasenwähler nach Anspruch 4, der Folgendes aufweist:
erste Anschlüsse (521, 522, 523), die vorgesehen sind zum Aufnehmen einer mehrphasigen Leistungsversorgung;
zweite Anschlüsse (541, 542, 543), die vorgesehen sind, um mit einer Leistungsversorgungsbuchse (4) für elektrische Einrichtung verbunden zu werden;
einen Satz von Schaltern (551, 552, 553, 554, 555, 556, 557, 558, 559) zum Verbinden der ersten Anschlüsse mit den zweiten Anschlüssen; und
eine Schaltung (56) zum Steuern der Schalter.

6. Phasenwähler nach Anspruch 7, wobei die Steuerschaltung (56) eine Steuerverbindung zwischen dem System (3) und einer Schaltvorrichtung (6) unterbricht, die selbst mit der Buchse (4) verbunden ist.

7. Eine mehrphasige Leistungsversorgungsinstallation, die Folgendes aufweist:
ein System (3) zum Liefern einer mehrphasigen Spannung;
eine Vielzahl von Einrichtungsleistungsversorgungsbuchsen (4); und
zwischen dem System und jeder Buchse, den Phasenwähler (5) nach einem der Ansprüche 4 bis 6.

8. Installation nach Anspruch 7, wobei eine mit Energie versorgende Schaltvorrichtung (6) zwischen jeden Wähler bzw. jedes Wählelement (5) und die Buchse (4), mit der er bzw. es assoziiert ist, angeordnet ist.

## Claims

1. A method of balancing a polyphase network for powering an installation comprising a plurality of sockets (4) of connection of electric equipment (72), wherein:
for each socket, a phase selector (5) is interposed, between a polyphase voltage supply system (3) and said socket; and
once a control signal for energizing one of the single-phase equipments has been received, the least loaded phase is selected to power this equipment, **characterized in that**:
the evaluation of the least loaded phase is based on a measurement of the voltages or of the currents of the phases, said measurement of the voltages or of the currents being triggered by a socket energizing control signal (C) supplied by said polyphase voltage supply system and intercepted by said phase selector.

2. The method of claim 1, wherein the energizing control signal is transmitted to the socket subsequently to the phase selection.

3. The method of claim 1 or 2, wherein a control signal for selecting the least loaded phase is sent by said polyphase voltage supply system (3) to said selectors.

4. A phase selector (5) **characterized in that** it is capable of implementing the method of any of claims 1 to 3.

5. The phase selector of claim 4, comprising:
first terminals (521, 522, 523) intended to receive a polyphase power supply;
second terminals (541, 542, 543) intended to be connected to an electric equipment power supply socket (4);
a set of switches (551, 552, 553, 554, 555, 556, 557, 558, 559) for connecting said first terminals to said second terminals; and
a circuit (56) for controlling said switches.

6. The phase selector of claim 7, wherein said control circuit (56) interrupts a control connection between the system (3) and a contactor (6), itself connected to the socket (4).

7. A polyphase power supply installation comprising:
a system (3) for supplying a polyphase voltage;
a plurality of equipment powering sockets (4); and
between said system and each socket, the phase selector (5) of any of claims 4 to 6.

8. The installation of claim 7, wherein an energizing contactor (6) is interposed between each selector (5) and the socket (4) to which it is associated.
